# FASCICULE DE BREVET EUROPEEN

(11) **EP 3 912 526 B1**
(45) Date de publication et mention de la délivrance du brevet: **07.06.2023**
(21) Numéro de dépôt: 21174557.5
(22) Date de dépôt: 18.05.2021
(51) Int. Cl.: A47J 36/16, A47J 37/06, A47J 43/07, B01F 27/07, B01F 27/1123, B01F 27/808

(54) **PALE DE BRASSAGE D ALIMENTS POUR APPAREIL DE CUISSON ET APPAREIL CORRESPONDANT**
RÜHRBLATT ZUM RÜHREN VON LEBENSMITTELN FÜR KOCHGERÄT UND ENTSPRECHENDES GERÄT
BLADE FOR STIRRING FOOD FOR A COOKING APPLIANCE AND CORRESPONDING APPLIANCE

(30) Priorité: 19.05.2020 FR 2005050
(43) Date de publication de la demande: 24.11.2021
(73) Titulaire: SEB S.A., 69130 Ecully (FR)
(72) Inventeur: PETITALLOT, Johann, 21000 Dijon (FR); BIZARD, Jean-Claude, 21121 Fontaine-les-Dijon (FR)
(74) Mandataire: SEB Développement

(56) Documents cités:
- EP-A1- 3 342 316
- WO-A1-2017/089828
- FR-A1- 2 896 677
- US-A1- 2018 184 848

## Description

### DOMAINE TECHNIQUE GENERAL

La présente invention se situe dans le domaine général des appareils de cuisson d'aliments à air chaud et plus particulièrement de ceux qui sont équipés d'une cuve de cuisson et d'une pale de brassage des aliments.

### ETAT DE LA TECHNIQUE

Dans le document FR2896677 au nom du présent demandeur est décrit un appareil du type évoqué ci-dessus.

La forme spécifique de la pale de brassage qui y est décrite lui confère la capacité de brasser efficacement les aliments disposés dans la cuve de cuisson, notamment pour mettre en oeuvre une étape d'enduction des aliments dans une faible quantité d'huile.

Comme représenté tout particulièrement à la figure 11 de ce document, la pale comporte un moyeu et un bras de brassage lequel comporte une première paroi avant et une seconde paroi arrière qui forment respectivement une surface de brassage et une surface de renfort. Ces deux parois se rejoignent dans leur partie supérieure et des nervures de renfort transversales assurent la liaison entre les deux parois et participent à former la structure du bras. Il résulte de ce qui précède qu'il existe des espaces creux entre les deux parois et les nervures de renfort puisqu'aucune paroi ne joint la partie inférieure des parois avant et arrière. Ces espaces creux sont et disposés directement en regard du fond de la cuve de cuisson.

Lorsque l'appareil de cuisson est en fonctionnement, c'est-à-dire lorsque la pale est animée d'un mouvement de rotation relativement à la cuve de cuisson dans laquelle sont contenus des aliments, il arrive que des fragments d'aliments viennent se loger dans ces espaces creux et il a été constaté que lors du nettoyage de la pale, ces fragments peuvent être particulièrement difficiles à déloger.

Des solutions pour résoudre ce problème pourraient être de combler ces zones creuses avec une matière formant joint, ou de rajouter à la pale un bouchon en matière plastique qui viendrait obturer ces espaces creux. Cependant, de telles solutions entraînent un surcout de matière et une complexification de la fabrication.

Les documents EP3342316 et US 2018/184848 décrivent une pale de brassage dont le bras de brassage comprend une seule et unique paroi pleine délimitée par une surface avant et une surface arrière, la section droite de ce bras étant telle que ladite surface avant présente une forme concave, au moins dans la région de la pale la plus proche dudit moyeu, la concavité de ladite forme étant orientée en direction du sens de rotation de la pale dans la cuve de cuisson.

La problématique des fragments d'aliments, telle qu'exposée plus haut, ne se pose plus ici puisqu'en faisant usage d'un bras à une seule et unique paroi pleine, il n'existe plus de zones creuses où ces fragments peuvent se loger.

Toutefois, la forme de cette pale ne présente pas une résistance mécanique satisfaisante et ne confère pas une efficacité de brassage au moins équivalente à une pale de brassage à deux parois.

Par ailleurs, le bras de brassage présenté par le document US 2018/184848 tend à déplacer les aliments depuis la périphérie de la cuve vers le centre de la cuve, ce qui réduit la surface de retournement.

La présente invention a pour but de résoudre tout ou partie des inconvénients ci-dessus.

### PRESENTATION DE L'INVENTION

Ainsi, la présente invention propose en premier lieu une pale de brassage d'aliments pour un appareil de cuisson d'aliments comportant une cuve de cuisson, ladite pale de brassage comprenant un moyeu d'axe (X-X') conformé pour être entraîné en rotation relativement à ladite cuve de cuisson autour dudit axe (X-X'), via ledit appareil de cuisson, dans un sens prédéterminé de rotation, moyeu auquel est raccordé un bras de brassage dans une zone de raccordement, ledit bras de brassage présentant un profil courbe s'étendant jusqu'à une extrémité libre qui s'étend en arrière de la zone de raccordement audit moyeu, quand on considère ledit sens de rotation, et comprenant une paroi pleine présentant une face avant et une face arrière délimitées par un bord inférieur et un bord supérieur, la section droite dudit bras étant telle que ladite face avant présente une forme concave, au moins dans la région de la pale la plus proche dudit moyeu, la concavité de ladite forme étant orientée dans le même sens que ledit sens de rotation, caractérisée par le fait que :
- le bord inférieur dudit bras s'étend dans un seul et même plan ;
- le bord supérieur dudit bras présente une pente descendante depuis ledit moyeu en direction de son extrémité libre ;
- la partie haute de la zone de raccordement dudit bras au dit moyeu s'étend selon une direction sensiblement radiale relativement à ce moyeu.

Grâce à la combinaison de ces caractéristiques, la pale de brassage présente une tenue mécanique satisfaisante et une efficacité de brassage se rapprochant de celle conférée par une pale de brassage à deux parois.

Selon d'autres caractéristiques avantageuses et non limitatives de l'invention, prises seules ou selon une combinaison quelconque d'au moins deux d'entre elles :
- ladite face avant présente une forme concave sur toute l'étendue ou sensiblement toute l'étendue dudit bras ;
- lesdites faces avant et arrière suivent sensiblement la même trajectoire dans un plan transversal audit bras ;
- en considérant la section droite dudit bras, lesdits bords supérieur et inférieur se prolongent dans des plans sensiblement perpendiculaires ;
- en considérant la section droite du dit bras, la longueur desdits bords supérieur et inférieur se prolongeant dans un premier plan depuis le moyeu est plus courte que la longueur desdits bords supérieur et inférieur se prolongeant dans un deuxième plan perpendiculaire au premier plan ;
- le rayon de courbure de ladite face avant à forme concave est variable au fur et à mesure que l'on s'éloigne dudit moyeu ;
- ledit rayon diminue au fur et à mesure que l'on s'éloigne dudit moyeu ;
- ladite extrémité libre se prolonge par un appendice de retournement d'aliments ;
- ladite pale est en un seul matériau et de préférence monobloc.

L'invention concerne également un appareil, notamment électrique, de cuisson d'aliments, qui comporte une pale de brassage selon l'une des caractéristiques précédentes.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
[Fig. 1] la figure 1 est une vue en perspective d'un appareil de cuisson représenté sans son couvercle, agencé pour recevoir une pale de brassage selon la présente invention ;
[Fig. 2] la figure 2 est une vue en perspective de la cuve de cuisson de l'appareil de la figure 1, recevant une pale selon la présente invention ;
[Fig. 3] la figure 3 est une vue analogue à la figure 2, mais vue de dessus ;
[Fig. 4] la figure 4 est une vue en perspective d'une pale selon l'invention ;
[Fig. 5] la figure 5 est une vue sensiblement équivalente à la figure 4, le moyeu de la pale n'étant que partiellement représenté ;
[Fig. 6] la figure 6 est une vue analogue à la figure 5, mais vue de dessus ;
[Fig. 7] la figure 7 est une vue en bout du bras de la pale des figures précédentes ;
[Fig. 8] la figure 8 est une vue du bras de la pale, selon le plan de coupe VIII-VIII de la figure 6 ;
[Fig. 9] la figure 9 est une vue du bras de la pale, selon le plan de coupe IX-IX de la figure 6.

### DESCRIPTION DETAILLEE DE L'INVENTION

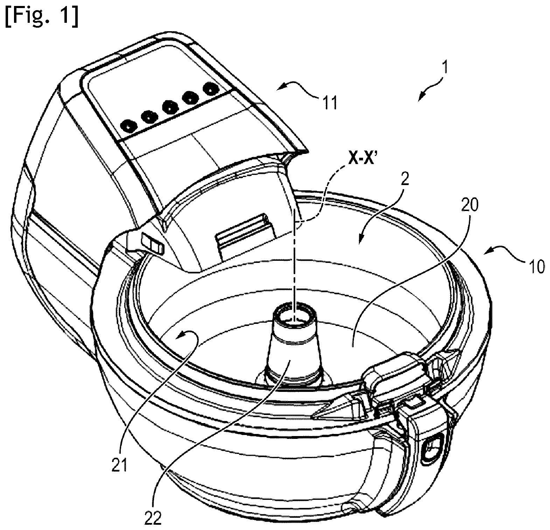

Un appareil de cuisson avec lequel la pale de brassage selon l'invention est susceptible d'être utilisée, est représenté schématiquement à la figure 1.

Il s'agit d'un appareil de structure généralement connue en soi qui permet de réaliser la cuisson d'aliments en morceaux, en faisant usage d'une quantité minimale de matière grasse. Il est particulièrement adapté à la préparation de frites ou de poêlées de légumes.

Cet appareil 1 comporte principalement un corps principal 10 en forme général de bol ouvert dans sa partie supérieure dont l'axe de révolution est référencé X-X'. En périphérie du corps principal 10 est visible une console 11 de mise en marche et de programmation de l'appareil.

L'appareil 1 comporte des moyens non représentés, tels que notamment un moteur électrique pour entraîner la pale de brasage, des moyens de chauffage tels une résistance électrique blindée et des moyens de ventilation pour souffler de l'air chauffé par les moyens de chauffage au travers une volute débouchant en regard des aliments disposés dans une cuve de cuisson 2. Le moteur électrique est avantageusement placé dans l'embase du corps principal 10. Il entraîne en rotation une noix d'entrainement non visible qui s'étend selon l'axe X-X', qui fait saillie vers le haut à partir du fond du corps principal 10.

Pour faciliter la consultation de la figure, le couvercle de fermeture de l'appareil, de préférence prévu amovible, qui est conformé pour se verrouiller sur le corps principal 10 et la console 11, n'a pas été représenté.

Au sein du corps principal 10 est disposée la cuve de cuisson 2, préférentiellement amovible, pour la réception des aliments à cuire. Une fois mise en place, cette cuve de cuisson 2 est prévue immobile par rapport au corps principal 10.

Elle comprend un fond 20 de forme discoïde et d'axe X-X'. A partir du fond 20 s'élève une paroi périphérique 21 d'axe de révolution X-X'. Au centre du fond 20 est prévue une ouverture non visible autour de laquelle s'élève un tube creux 22 tronconique, amovible et ouvert à son sommet. Cet agencement permet d'engager la cuve de cuisson 2 sur le corps principal 10 de manière à ce que la noix d'entrainement précitée s'élève au centre du tube 22, en vue de sa coopération avec la pale selon l'invention qui sera décrite ci-après. Le tube creux 22 permet également d'assurer le maintien de la pale de brassage 3 selon la direction de l'axe X-X'.

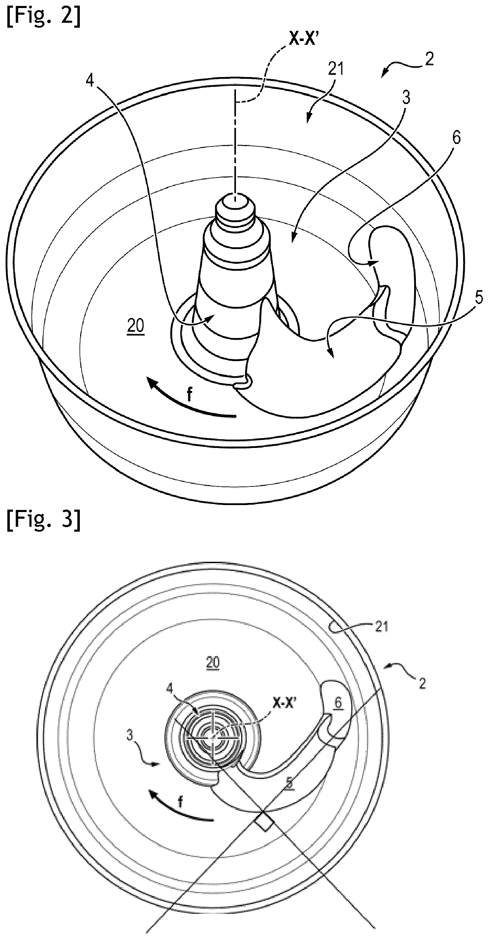

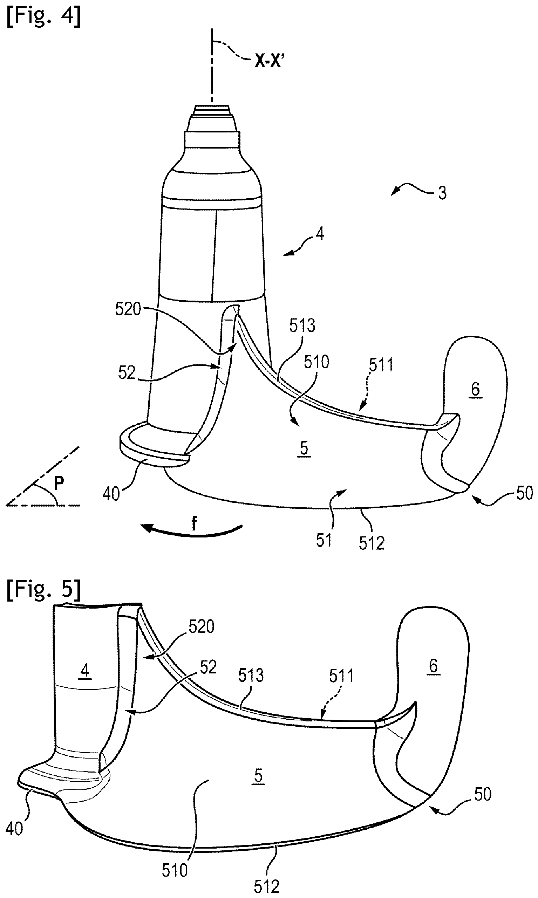

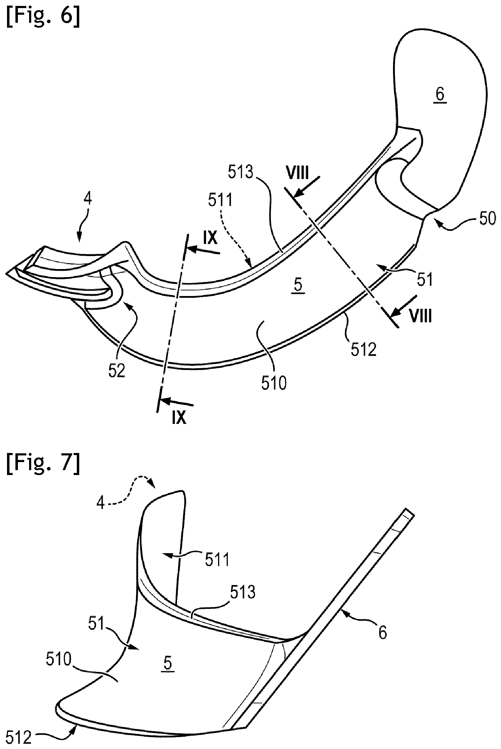

Aux figures 2 et 3, cette pale de brassage 3 est visible en place dans la cuve de cuisson 2, tandis qu'elle est représentée seule à la figure 4, puis partiellement aux figures 5 à 7.

Elle est avantageusement en un seul matériau et de préférence monobloc. Il peut s'agir d'un matériau métallique ou encore d'une matière plastique.

Elle comprend un moyeu 4 destiné à coopérer avec la noix d'entrainement précité de l'appareil 1, de façon que ce dernier puisse entraîner en rotation la pale de brassage au sein de la cuve de cuisson 2, laquelle reste immobile. Le moyeu 4 s'étend de façon coaxiale à l'axe X-X' de l'appareil 1 et de la cuve 2.

A la partie inférieure de ce moyeu 4 se raccorde, selon une direction sensiblement radiale, un bras de brassage 5 qui, préférentiellement, se prolonge au niveau de son extrémité libre 50 opposée au moyeu 4, par un appendice 6 de retournement d'aliments.

Ce bras de brassage 5 est conçu pour repousser les aliments en direction de la périphérie de la cuve de cuisson 2. Il est plus particulièrement conformé pour déplacer les aliments de façon centrifuge en direction de la paroi 21 de la cuve de cuisson 2, de façon à les diriger vers l'appendice 6 précité.

Conformément à l'invention, le bras de brassage 5 comprend une seule et même paroi 51 qui forme un déflecteur frontal orienté pour exercer un effort de poussée sur les aliments dans la direction du mouvement de rotation de la pale 3, comme symbolisé par la flèche f sur les figures. Cette paroi présente globalement une hauteur suffisante pour empêcher les aliments de passer au-dessus d'elle.

Comme illustré à la figure 4, la paroi 51 présente un profil courbe, dont l'extrémité libre 50 s'étend en arrière d'une zone de raccordement 52 au moyeu 4, quand on considère comme référence spatiale le sens de rotation de la pale de brassage 3. Le profil courbe présente donc un bord d'attaque fuyant vers l'arrière et vers la paroi 21 de la cuve de cuisson 2. De cette manière, les aliments poussés par le bras 5 sont déplacés de manière centrifuge vers la périphérie de la cuve de cuisson 2, ce qui évite de créer des « paquets » d'aliments tournant autour de la pale 3 selon un trajet purement circulaire.

La paroi 51 est délimitée par une face avant 510 et une face arrière 511, ces qualificatifs étant pris en référence au sens de rotation de la pale de brassage 3. Avantageusement, ces faces avant et arrière 510 et 511 suivent sensiblement la même trajectoire dans un plan transversal au bras 5.

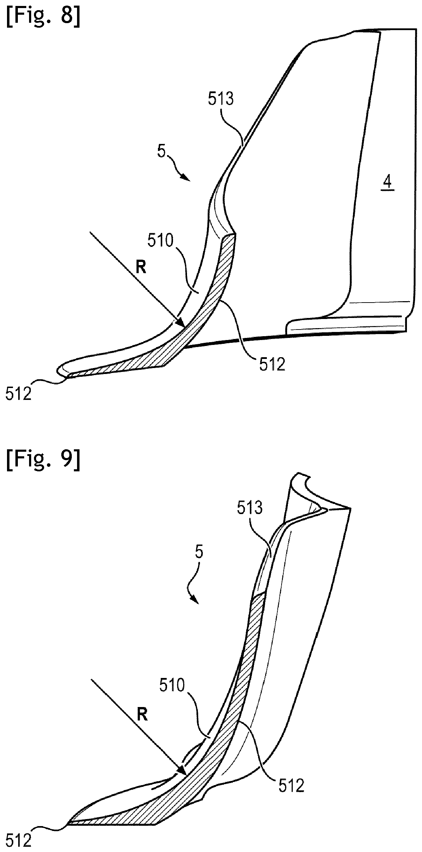

Par ailleurs, la section droite du bras 5, c'est-à-dire de la paroi 51, est concave, la concavité de cette forme étant orientée dans le même sens que le sens de rotation de la pale 3 (voir les figures 8 et 9 notamment).

Avantageusement, la face avant 510 présente une forme concave sur toute l'étendue ou sensiblement toute l'étendue dudit bras 5. Cela confère au bras 5 une rigidité et une résistance accrues.

Conformément à l'invention, le bord inférieur 512 dudit bras de brassage 5 s'étend dans un seul et même plan. Exprimé autrement, ce bord 512 s'étend à un niveau constant vis-à-vis du moyeu 4. Avantageusement et comme montré tout particulièrement à la figure 4, ce bord 512 ainsi que le bord inférieur 40 du moyeu 4 s'étend dans un seul et même plan P.

Dans ces conditions, lors du mouvement de rotation de la pale 3 vis-à-vis de la cuve de cuisson 2, le bord inférieur 512 suit le plan du fond 20 de la cuve de cuisson 2, ce qui limite le risque que des petits fragments d'aliments parviennent à se glisser entre eux.

Toujours selon l'invention, le bord supérieur 513 du bras 5 présente une pente descendante depuis le moyeu 4 en direction de son extrémité libre, là où il se raccorde à l'appendice 6.

Cette pente descendante, en combinaison avec une concavité plus prononcée en direction de l'extrémité libre du bras et avec un profil courbe vers l'arrière, a pour effet, à la manière d'un entonnoir, de ramener les aliments en direction de l'extrémité libre du bras.

Par ailleurs, la partie haute 520 de la zone de raccordement 52 du bras 5 au moyeu 4 s'étend selon une direction sensiblement radiale relativement à ce moyeu. Exprimé différemment, cette partie haute s'étend parallèlement aux génératrices du moyeu 4.

Cela contribue à balayer un maximum de surface dans cette zone de la cuve de cuisson 2. On retrouve également un effet d'entonnoir tel que décrit ci-dessus (large vers le moyeu et plus fine vers l'extrémité).

Comme illustré plus particulièrement à la figure 3, en considérant la section droite du dit bras 5, lesdits bords supérieur 513 et inférieur 512 se prolongent dans des plans sensiblement perpendiculaires.

Toujours en considérant la section droite du dit bras 5, la longueur desdits bords supérieur 513 et inférieur 512 se prolongeant dans un premier plan depuis le moyeu 4 est plus courte que la longueur desdits bords supérieur 513 et inférieur 512 se prolongeant dans un deuxième plan perpendiculaire au premier plan.

Cette caractéristique a l'avantage de concentrer davantage d'aliments en direction de l'extrémité libre 50 et donc vers l'appendice 6 de retournement d'aliments.

De préférence et comme montré aux figures 8 et 9, le rayon de courbure R de la face avant 510 à forme concave est variable. Avantageusement, ce rayon diminue au fur et à mesure que l'on s'éloigne dudit moyeu 4. A titre purement indicatif, il évolue entre 95 et 15 millimètres.

Enfin, l'appendice 6 s'étend dans le prolongement du bras, vers l'arrière et vers le haut, afin de contribuer efficacement au retournement des aliments déplacés par la pale.

## Revendications

1. Pale (3) de brassage d'aliments pour un appareil (1) de cuisson d'aliments comportant une cuve (2) de cuisson, ladite pale (3) de brassage comprenant un moyeu (4) d'axe (X-X') conformé pour être entraîné en rotation relativement à ladite cuve (2) de cuisson autour dudit axe (X-X'), via ledit appareil (1) de cuisson, dans un sens prédéterminé de rotation, moyeu (4) auquel est raccordé un bras de brassage (5) dans une zone de raccordement (52), ledit bras de brassage (5) présentant un profil courbe et s'étendant jusqu'à une extrémité libre (50) qui s'étend en arrière de la zone de raccordement audit moyeu, quand on considère ledit sens de rotation, et comprenant une paroi pleine (51) présentant une face avant (510) et une face arrière (511) délimitées par un bord inférieur (512) et un bord supérieur (513), la section droite dudit bras (5) étant telle que ladite face avant (510) présente une forme concave, au moins dans la région de la pale (3) la plus proche dudit moyeu (4), la concavité de ladite forme étant orientée dans le même sens que ledit sens de rotation, **caractérisée par le fait que** :
- le bord inférieur (512) dudit bras (5) s'étend dans un seul et même plan (P) ;
- le bord supérieur (513) dudit bras (5) présente une pente descendante depuis ledit moyeu (4) en direction de son extrémité libre (50) ;
- la partie haute (520) de la zone de raccordement (52) dudit bras (5) audit moyeu (4) s'étend selon une direction sensiblement radiale relativement à ce moyeu.

2. Pale (3) de brassage selon la revendication 1, **caractérisée par le fait que** ladite face avant (510) présente une forme concave sur toute l'étendue ou sensiblement toute l'étendue dudit bras (5).

3. Pale (3) de brassage selon la revendication 1 ou 2, **caractérisée par le fait que** lesdites faces avant (510) et arrière (511) suivent sensiblement la même trajectoire dans un plan transversal audit bras (5).

4. Pale (3) de brassage selon l'une des revendications précédentes, **caractérisée par le fait que**, en considérant la section droite du dit bras (5), lesdits bords supérieur (513) et inférieur (512) se prolongent dans des plans sensiblement perpendiculaires.

5. Pale (3) de brassage selon la revendication 4, **caractérisée par le fait que**, en considérant la section droite du dit bras (5), la longueur desdits bords supérieur (513) et inférieur (512) se prolongeant dans un premier plan depuis le moyeu (4) est plus courte que la longueur desdits bords supérieur (513) et inférieur (512) se prolongeant dans un deuxième plan perpendiculaire au premier plan.

6. Pale (3) de brassage selon l'une des revendications précédentes, **caractérisée par le fait que** le rayon de courbure (R) de ladite face avant (510) à forme concave est variable au fur et à mesure que l'on s'éloigne dudit moyeu (4).

7. Pale (3) de brassage selon la revendication 6, **caractérisée par le fait que** ledit rayon (R) diminue au fur et à mesure que l'on s'éloigne dudit moyeu (4).

8. Pale (3) de brassage selon l'une des revendications 1 à 7, **caractérisée par le fait que** ladite extrémité libre (50) se prolonge par un appendice (6) de retournement d'aliments.

9. Pale (3) de brassage selon l'une des revendications précédentes, **caractérisée par le fait que** ladite pale est en un seul matériau et de préférence monobloc.

10. Appareil (1), notamment électrique, de cuisson d'aliments, **caractérisé par le fait que** ledit appareil comporte une pale (3) de brassage selon l'une des revendications précédentes.

## Patentansprüche

1. Rührblatt (3) für Lebensmittel für eine Kocheinrichtung (1) für Lebensmittel, umfassend einen Kochbehälter (2), wobei das Rührblatt (3) eine Nabe (4) mit Achse (X-X) umfasst, die dazu angepasst ist, durch die Kocheinrichtung (1) in Bezug auf den Kochbehälter (2) um die Achse (X-X') in einer vorbestimmten Drehrichtung in Drehung versetzt zu werden, Nabe (4), mit der ein Rührarm (5) in einem Verbindungsbereich (52) verbunden ist, wobei das Rührblatt (5) ein gekrümmtes Profil aufweist und sich bis zu einem freien Ende (50) erstreckt, das sich hinter dem Verbindungsbereich mit der Nabe erstreckt, wenn in der Drehrichtung betrachtet, und eine volle Wand (51) umfassend, die eine Vorderseite (510) und eine Hinterseite (511) aufweist, die durch einen unteren Rand (512) und einen oberen Rand (513) begrenzt sind, wobei der Querschnitt des Arms (5) derart ist, dass die Vorderseite (510) eine konkave Form aufweist, wobei mindestens im Bereich des Rührblatts (3), der der Nabe (4) am nächsten liegt, die Konkavität der Form in der gleichen Richtung ausgerichtet ist wie die Drehrichtung, **gekennzeichnet durch** die Tatsache, dass:
- der untere Rand (512) des Arms (5) sich in einer einzigen und gleichen Ebene (P) erstreckt;
- der obere Rand (513) des Arms (5) ausgehend von der Nabe (4) eine fallende Neigung in Richtung seines freien Endes (50) aufweist;
- der obere Teil (520) des Verbindungsbereichs (52) des Arms (5) mit der Nabe (4) sich in einer im Wesentlichen radialen Richtung in Bezug auf diese Nabe erstreckt.

2. Rührblatt (3) nach Anspruch 1, **gekennzeichnet durch** die Tatsache, dass die Vorderseite (510) auf der gesamten Erstreckung oder im Wesentlichen der gesamten Erstreckung des Arms (5) eine konkave Form aufweist.

3. Rührblatt (3) nach Anspruch 1 oder 2, **gekennzeichnet durch** die Tatsache, dass die Vorder- (510) und Hinterseite (511) im Wesentlichen der gleichen Bahn in einer Ebene quer zum Arm (5) folgen.

4. Rührblatt (3) nach einem der vorstehenden Ansprüche, **gekennzeichnet durch** die Tatsache, dass der obere (513) und der untere (512) Rand im Querschnitt des Arms (5) betrachtet sich in im Wesentlichen senkrechten Ebenen ausdehnen.

5. Rührblatt (3) nach Anspruch 4, **gekennzeichnet durch** die Tatsache, dass im Querschnitt des Arms (5) betrachtet die Länge des oberen (513) und des unteren (512) Rands, die sich in einer ersten Ebene ausgehend von der Nabe (4) ausdehnen, kürzer ist als die Länge des oberen (513) und des unteren (512) Rands, die sich in einer zweiten Ebene senkrecht zur ersten Ebene ausdehnen.

6. Rührblatt (3) nach einem der vorstehenden Ansprüche, **gekennzeichnet durch** die Tatsache, dass der Krümmungsradius (R) der Vorderseite (510) mit konkaver Form mit zunehmender Entfernung von der Nabe (4) variabel ist.

7. Rührblatt (3) nach Anspruch 6, **gekennzeichnet durch** die Tatsache, dass der Radius (R) mit zunehmender Entfernung von der Nabe (4) kleiner wird.

8. Rührblatt (3) nach einem der Ansprüche 1 bis 7, **gekennzeichnet durch** die Tatsache, dass das freie Ende (50) sich durch einen Fortsatz (6) zum Wenden von Lebensmitteln ausdehnt.

9. Rührblatt (3) nach einem der vorstehenden Ansprüche, **gekennzeichnet durch** die Tatsache, dass das Blatt aus einem einzigen Material und vorzugsweise einstückig ist.

10. Einrichtung (1), insbesondere elektrische, zum Kochen von Lebensmitteln, **gekennzeichnet durch** die Tatsache, dass die Einrichtung ein Rührblatt (3) nach einem der vorstehenden Ansprüche umfasst.

## Claims

1. Blade (3) for stirring food for an appliance (1) for cooking food comprising a cooking vessel (2), said stirring blade (3) comprising an axle (4) of axis (X-X) shaped to be rotated relative to said cooking vessel (2) about said axis (X'X'), via said cooking appliance (1), in a predetermined rotation direction, axle (4) to which a stirring arm (5) is connected in a connection zone (52), said stirring arm (5) having a curved profile and extending to a free end (50) which extends behind the zone for connecting to said axle, when said rotation direction is considered, and comprising a solid wall (51) having a front face (510) and a rear face (511) delimited by a lower edge (512) and an upper edge (513), the straight section of said arm (5) being such that said front face (510) has a concave shape, at least in the region of the blade (3) closest to said axle (4), the concavity of said shape being oriented in the same direction as said rotation direction, **characterised by** the fact that:
- the lower edge (512) of said arm (5) extends in one single and same plane (P);
- the upper edge (513) of said arm (5) has a slope descending from said axle (4) in the direction of its free end (50);
- the top part (520) of the zone for connecting (52) said arm (5) to said axle (4) extends in a direction, substantially radial relative to this axle.

2. Stirring blade (3) according to claim 1, **characterised in that** said front face (510) has a concave shape over the whole extent or substantially the whole extent of said arm (5).

3. Stirring blade (3) according to claim 1 or 2, **characterised in that** said front (510) and rear (511) faces follow substantially the same path in a transverse plane to said arm (5).

4. Stirring blade (3) according to one of the preceding claims, **characterised in that**, by considering the straight section of said arm (5), said upper (513) and lower (512) arms extend into substantially perpendicular planes.

5. Stirring blade (3) according to claim 4, **characterised in that**, by considering the straight section of said arm (5), the length of said upper (513) and lower (512) edges extending into a first plane from the axle (4) is shorter than the length of said upper (513) and lower (512) edges extending into a second plane perpendicular to the first plane.

6. Stirring blade (3) according to one of the preceding claims, **characterised in that** the bend radius (R) of said concave-shaped front face (510) is variable as it extends from said axle (4).

7. Stirring blade (3) according to claim 6, **characterised in that** said radius (R) decreases as it extends from said axle (4).

8. Stirring blade (3) according to one of claims 1 to 7, **characterised in that** said free end (50) extends through a food return accessory (6).

9. Stirring blade (3) according to one of the preceding claims, **characterised in that** said blade is made of one single material, and is preferably one-piece.

10. Appliance (1), in particular electrical, for cooking food, **characterised in that** said appliance comprises a stirring blade (3) according to one of the preceding claims.
